# EUROPEAN PATENT SPECIFICATION

(11) **EP 1 780 098 B1**
(45) Date of publication and mention of the grant of the patent: **26.11.2008**
(21) Application number: 06255118.9
(22) Date of filing: 04.10.2006
(51) Int. Cl.: B62D 5/04, F16H 7/14

(54) **Belt-type electric power steering apparatus**
Elektrische Servolenkungsvorrichtung vom Riementyp
Direction assistée électrique du type à courroie

(30) Priority: 25.10.2005 KR 20050100983
(43) Date of publication of application: 02.05.2007
(73) Proprietor: Mando Corporation, Pyeongtaek-si, Gyeonggi-do (KR)
(72) Inventor: Namgung, Joo, Wonju-si, Gangwon-do 220-100 (KR); Jo, Heegwon, Gunpo-si Gyeonggi-do (KR)
(74) Representative: Neobard, William John

(56) References cited:
- US-A1- 2005 079 939
- US-A1- 2005 121 251

## Description

The present invention relates to a belt-type electric power steering apparatus.

Embodiments of the present invention relate to a belt-type electric power steering apparatus, in which a motor pulley housing and a gearbox housing are coupled by bolts and release of the bolts is prevented, thereby preventing the droop of the motor pulley housing.

In the past, hydraulic power steering apparatuses using hydraulic pressure of a hydraulic pump were commonly used as power steering apparatuses for vehicles. Since the 1990's, electric power steering apparatuses using an electric motor have become popular.

In a conventional hydraulic steering apparatus, a hydraulic pump, which is a power source assisting power for the hydraulic steering apparatus, is operated by an engine of a vehicle, and always consumes energy regardless of the rotation of a steering wheel. In an electric power steering apparatus, on the other hand, if a steering wheel rotates and generates torque, an electric motor which is operated by electric energy provides steering assistant power. Therefore, when the electric power steering apparatus is used, it is possible to improve energy efficiency in comparison with the hydraulic power steering apparatus.

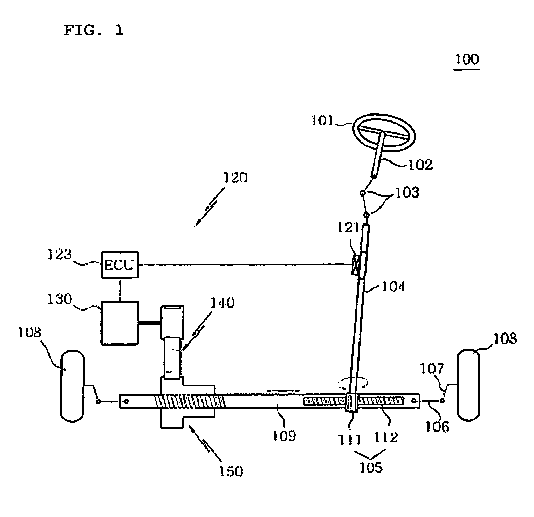

Referring to FIG. 1, a conventional electric power steering apparatus includes a steering system 100 extending from a steering wheel 101 to both wheels 108, and an assistant power mechanism 120 for providing steering power.

The steering system 100 includes a steering shaft having an end connected to the steering wheel 101 to rotate along with the steering wheel 101, and the other end connected to a pinion shaft 104 by a pair of universal joints 103. Further, the pinion shaft 104 is connected to a rack bar 109 through a rack and pinion mechanism 105, while both ends of the rack bar 109 are connected to both wheels of the vehicle by tie rods 106 and knuckle arms 107, respectively.

The rack and pinion mechanism 105 has a pinion gear 111 mounted on the pinion shaft 104, and a rack gear 112 mounted on a peripheral surface of one end of the rack bar 109 and engaged with the pinion gear 111. When a driver operates the steering wheel 101, torque is generated in the steering system 100 and causes the rack and pinion mechanism 105 and the tie rods 106 to steer the wheels 108.

The assistant power mechanism 120 includes a torque sensor 121 for sensing torque applied to the steering wheel 101 by the driver, so as to output an electric signal in proportion to the sensed torque, an electronic control unit 123 for generating a control signal depending on the electric signal transmitted from the torque sensor 121, an electric motor 130 for generating steering power according to the control signal transmitted from the electronic control unit 123, and a belt-type power transmission apparatus 140 for transmitting the assistant power, generated by the electric motor 130, to the rack bar 109 through the belt.

Accordingly, in the electric power steering apparatus, the torque generated by the rotation of the steering wheel 101 is transmitted through the rack and pinion mechanism 105 to the rack bar 109. The assistant steering power which the electric motor 130 generates depending on the generated torque is transmitted by the belt-type power transmission apparatus through a ball screw 150 to the rack bar 109. In other words, the rack bar is moved along an axis thereof by the torque generated in the steering system 100 and the assistant power generated by the electric motor 130.

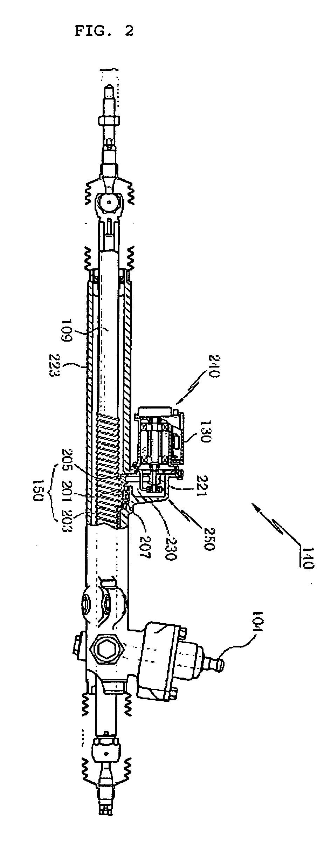

Referring to FIG. 2, the conventional power steering apparatus for the vehicle includes the rack bar 109 extending across the vehicle and having the rack gear mounted on an outer peripheral surface thereof, the pinion shaft 104 having the pinion gear engaged with the rack gear, the ball screw unit 150 having balls 210, a ball screw 203, and a ball nut 205 engaged with the ball screw 203 through the balls 201, the belt-type power transmission apparatus 140 connecting the ball nut 205 to the shaft 221 of the electric motor, and the electric motor 130. Further, a motor pulley housing 240 encloses the electric motor and is fixed to a gearbox housing 250 by a bolt coupling.

The pinion shaft 104 is connected to the steering wheel through the steering shaft, and the rack bar 109 having the screw formed by a predetermined length at one end thereof is contained in a rack housing 223.

The ball screw unit 150 includes the ball nut 205 formed to be coaxial with the rack bar 109 and enclosing the rack bar 109, and the balls 201 arranged on the outer peripheral surface of the rack bar 109 and contacting the ball screw 203. The ball nut 205 rotates as the motor shaft 221 rotates. A bearing 207 is interposed between the outer surface of the ball nut 205 and the inner surface of the rack housing 223 in order for the ball nut 205 to rotate smoothly.

The belt type power transmission apparatus 140 includes a belt 230 connecting the motor shaft 221 to the ball nut 205, and transmits steering power generated from the electric motor 130 in proportion to the steering torque applied to the steering wheel to the rack bar 109 through the ball nut 205. In other words, as the motor shaft 221 rotates, the ball nut 205 rotates by receiving the rotational force of the motor shaft 221 through the belt 230. When the ball nut 205 rotates, the rack bar 109 moves linearly in a direction of the axis of the rack bar 109.

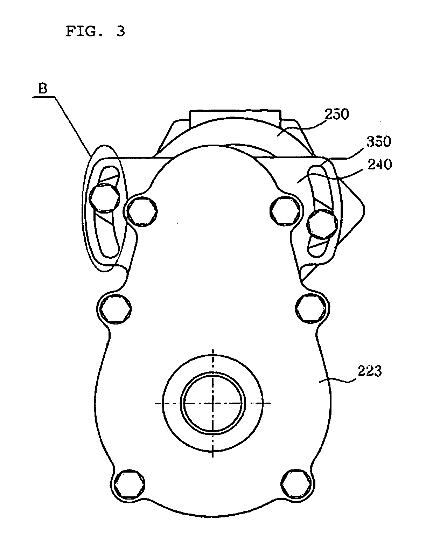

FIG. 3 is a side view showing a motor pulley housing and gearbox housing for the conventional electric power steering apparatus of the vehicle.

The motor is fixed to the gearbox housing 250 by coupling the motor pulley housing 240 to the gearbox housing 250 using the bolts. The body has curved elongate guide holes to allow tensioning, and the bolts secure it in as selected position. During steering of the wheels, the motor 221 rotates to operate the belt 230, causing the ball nut 205 to rotate. Thus, the tension of the belt 230 is applied to the motor shaft 221 and the rack bar 109 provided with the ball nut 205 so that the force of the motor shaft 221 and the rack bar 109 pulls the motor shaft 221 and the rack bar 109 toward each other. The force concentrates on the bolt coupling portion of the pulley housing 240 and the gearbox housing 250 which is mechanically weakened. Further, during the steering of the wheels, the motor shaft 221 rotates while generating vibration and impact, etc. which may cause loosening of the bolts. As a result, there is a disadvantage in that the motor shaft 221 moves in a direction to the rack bar 105 provided with the ball nut 205 so as to reduce the tension of the belt 230, thereby causing noise between the belt 230 and the pulley, as well as damaging the belt 230.

A prior art document, US 2005/012151 discloses a belt type electric power steering apparatus, the apparatus comprising a gear box housing enclosing a rack gear and a ball screw, a motor pulley housing coupled to the gear box housing and enclosing an electric motor, a belt for transmitting rotational force of the electric motor to a rack bar and bolts connecting the motor pulley housing to the gear box housing.

It is an object of the invention to at least partly avoid problems of the prior art.

The present invention is defined by the appended claims.

The above and other objects, features and advantages of the present invention will be more apparent from the following detailed description taken in conjunction with the accompanying drawings, in which:
FIG. 1 is a schematic view showing a configuration of a conventional electric power steering apparatus for a vehicle;
FIG. 2 is a sectional view showing the conventional electric power steering apparatus for a vehicle; FIG. 3 is a side view showing a motor pulley housing and a gearbox housing for the conventional electric power steering apparatus of the vehicle;
FIG. 4 is a partial sectional view of a portion marked by ellipse B in FIG. 3, embodying the present invention;
FIG. 5A is a front view of a portion marked by ellipse B in FIG. 3, embodying the present invention;
FIG. 5B is a side view of a portion marked by ellipse B in FIG. 3, embodying the present invention; and
FIG. 6 shows washers used for preventing loosening of bolts shown in FIGS. 4 and 5B.

In the various figures, like reference signs refer to like parts.

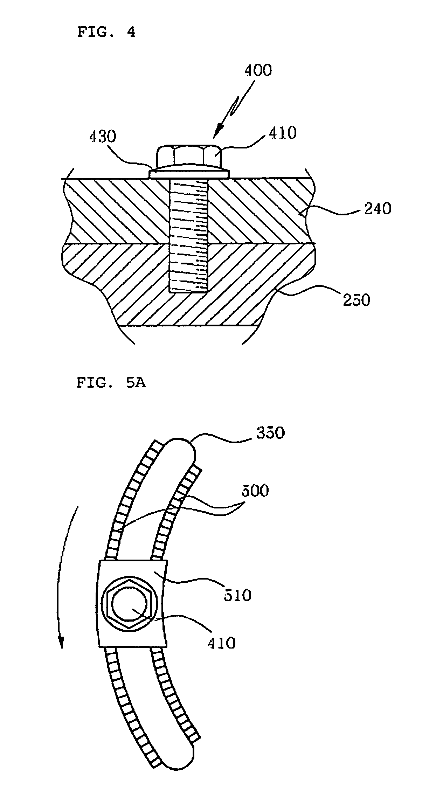

Referring to FIG. 4, the combination of a motor pulley housing 240 and a gearbox housing 250 by means of bolts is shown, in which a locking washer 430 is interposed between a bolt head 410 and the gearbox housing 250.

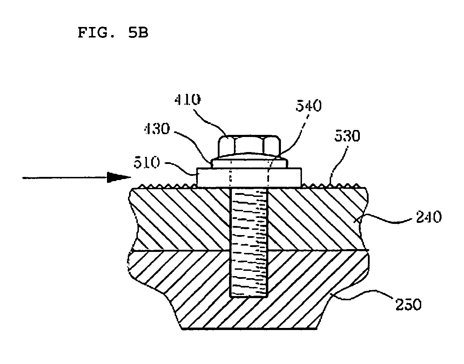

Referring to FIGs. 5A and 5B, the tension of the belt 230 causes force to be applied to the motor pulley housing 240, mounted on and fixed to the gearbox housing 250 by means of the bolts, in a direction marked by an arrow in FIG. 5B. The first prominence 500 is formed at both edges of a curved elongate guide hole 350 in order to prevent the movement of the motor pulley housing 240 in the direction marked by the arrow in FIG. 5B. A block-shaped washer 510 is disposed between the bolt head 410 and the gearbox housing 250, and has the second prominence 530 formed on a surface thereof, and a hole for the bolt formed at a center portion thereof. The locking washer 430 is interposed between the bolt head 410 and the block-shaped washer 510 so as to prevent movement of the motor pulley housing 240 by the first prominence 500 formed at both edges of the bolt guide hole 350 of the gearbox 250 and the second prominence 530 formed on the block-shaped washer 510. Further, the locking washer 430 is interposed between the bolt head 410 and the block-shaped washer 510, so as to prevent the bolt 400 from being loosened due to vibrations generated during the operation of the vehicle.

The washers are generally used to prevent the bolt head or nut from damaging the object to be coupled caused by the coupling force of the bolt or nut, or to prevent the coupled bolt or nut from being loosened by mechanical vibrations.

Doughnut-shaped plane washers made of a metal material are generally used as washers to prevent the damage of the material.

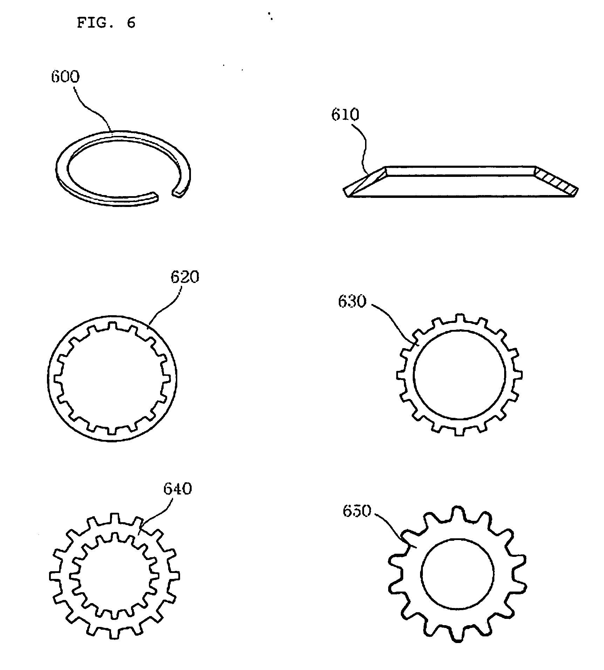

Referring to FIG. 6, C-type spring washer 600 made by cutting a portion of a coil spring, a disc spring washer 610 with a disc shape, an inner tooth washer 620 with inner teeth formed on an inner periphery thereof, an outer tooth washer 630 with outer teeth formed on an outer periphery thereof, inner and outer tooth washer 640 with inner and outer teeth formed on inner and outer peripheries thereof, and a disc washer 650 with prominence formed on an outer periphery thereof, are mainly used as washers 40 to prevent the release of the bolts.

As described above, in embodiments, the motor pulley housing is coupled to the gearbox housing by using the locking washers and the like, thereby making it possible to prevent the release of the bolts and the movement of the motor shaft to the rack bar with the ball nut. Thus, there is an advantage in that it is possible to prevent reduction of tension of the belt and the generation of noise, and prevent the damage to the belt in advance.

The invention is not restricted to the described features of the embodiments.

## Claims

1. A belt type electric power steering apparatus, the apparatus comprising:
a gearbox housing (250) enclosing a rack gear and a ball screw;
a motor pulley housing (240) coupled to the gearbox housing and enclosing an electric motor;
a belt (230) for transmitting rotational force of the electric motor to a rack bar; and
bolts (400) connecting the motor pulley housing (240) and the gearbox housing (250); **characterized by**:
locking washers (430) interposed between bolt heads (410) of the bolts (400) and the gearbox housing (250), for preventing loosening of the bolts (400) when the motor pulley housing (240) is coupled to the gearbox housing (250);
first prominences (500) with a sawtooth shape being formed at both edges of a bolt guide hole (350) of the gearbox housing to which the motor pulley housing is coupled;
square washers (510) being interposed between the bolt heads (410) and the gearbox housing (250) and having second prominences (530) engaged with the first prominences (500), respectively.

2. A belt type electric power steering apparatus according to claim 1, wherein the locking washer (430) is one of a disc spring washer, a C-shaped spring washer, an outer tooth washer, an inner tooth washer, and a disc washer.

## Patentansprüche

1. Elektrische Servolenkung vom Riementyp mit:
einem Getriebegehäuse (250), das einen zahntrieb und einen Kugelgewindetrieb umgibt;
einem Motorriemenscheibengehäuse (240), das mit dem Getriebegehäuse verbunden ist und einen Elektromotor umgibt;
einem Riemen (230) zur Übertragung von Drehkräften des Elektromotors auf eine Zahnstange; und
Bolzen (400), die das Motorriemenscheibengehäuse (240) und das Getriebegehäuse (250) verbinden; **dadurch gekennzeichnet, dass**:
Sicherungsscheiben (430) zwischen Bolzenköpfen (410) der Bolzen (400) und dem Getriebegehäuse (250) zwischengeschaltet sind, um ein Lockerwerden der Bolzen (400) zu verhindern, wenn das Motorriemenscheibengehäuse (240) mit dem Getriebegehäuse (250) verbunden ist;
erste sägezahnförmige Erhöhungen (500) an beiden Enden einer Bolzenführungsöffnung (350) des Getriebegehäuses gebildet sind, mit welchem das Motorriemenscheibengehäuse verbunden ist;
Vierkantscheiben (510) zwischen den Bolzenköpfen (410) und dem Getriebegehäuse (250) zwischengeschaltet sind bzw. zweite Erhöhungen (530) aufweisen, die in die ersten Erhöhungen (500) eingreifen.

2. Elektrische Servolenkung vom Riementyp nach Anspruch 1, wobei die Sicherungsscheibe (430) eine Tellerspannscheibe, eine C-förmige Spannscheibe, eine äußere zahnscheibe, eine innere Zahnscheibe oder eine Tellerscheibe ist.

## Revendications

1. Appareil de conduite électrique assistée du type à courroie, appareil comprenant :
un boîtier de train d'engrenage (250) enserrant un engrenage à crémaillère et une vis à bille ;
un boîtier de poulie motrice (240) couplé au boîtier de train d'engrenage et enserrant un moteur électrique ;
une courroie (230) pour transmettre une force de rotation du moteur électrique à la barre à crémaillère ; et
des boulons (400) raccordant le boîtier de poulie motrice (240) et le boîtier de train d'engrenage (250) ; **caractérisé par**
des rondelles de serrage (430) intercalées entre les têtes (410) des boulons (400) et le boîtier de train d'engrenage (250), afin d'empêcher le desserrement des boulons (400) lorsque le boîtier de poulie motrice (240) est couplé au boîtier de train d'engrenage (250) ;
des premières proéminences (500) ayant une forme en dents de scie qui sont façonnées aux deux bords d'un trou guide-boulon (350) du boîtier de train d'engrenage, auquel le boîtier de la poulie motrice est couplé ;
des rondelles carrées (510) étant intercalées entre les têtes de boulons (410) et le boîtier de train d'engrenage (250) et ayant des secondes proéminences (530) engagées dans les premières proéminences (500), respectivement.

2. Appareil de conduite électrique assisté du type à courroie selon la revendication 1, dans lequel la rondelle de serrage (430) est une rondelle choisie parmi une rondelle à ressort Belleville, une rondelle à ressort en forme de C, une rondelle à dents externes, une rondelle à dents internes et une rondelle à disque.
